# EUROPÄISCHE PATENTSCHRIFT

(11) **EP 2 985 988 B1**
(45) Veröffentlichungstag und Bekanntmachung des Hinweises auf die Patenterteilung: **30.09.2020**
(21) Anmeldenummer: 15002229.1
(22) Anmeldetag: 28.07.2015
(51) Int. Cl.: H04M 9/00

(54) **INTERCOM-NETZWERK UND SPRECHSTELLE**
INTERCOM NETWORK AND VOICE STATION
RESEAU INTERCOM ET POSTE TELEPHONIQUE

(30) Priorität: 15.08.2014 DE 102014011963; 23.01.2015 DE 202015000424 U
(43) Veröffentlichungstag der Anmeldung: 17.02.2016
(73) Patentinhaber: RIEDEL Communications International GmbH, 42109 Wuppertal (DE)
(72) Erfinder: DIEHL, Christian, 42109 Wuppertal (DE); RIEDEL, Thomas, 42109 Wuppertal (DE)
(74) Vertreter: Roche, von Westernhagen & Ehresmann

(56) Entgegenhaltungen:
- EP-A1- 1 487 186
- DE-A1-102006 033 295
- US-A1- 2004 109 552
- US-A1- 2011 206 211

## Beschreibung

Die Anmelderin entwickelt, produziert und vertreibt seit mehr als 10 Jahren Intercom-Netzwerke und Sprechstellen für Intercom-Netzwerke.

Als Sprechstelle im Sinne der vorliegenden Patentanmeldung wird - im Sinne einer konsistenten Nomenklatur auch in Bezug zum Stand der Technik - ein Element bezeichnet, welches einen Lautsprecher und ein Mikrofon aufweist, und zur Teilnahme in einem Intercom-Netzwerk ausgebildet ist.

Ein Intercom-Netzwerk ist eine Art komplexe Gegensprechanlage mit zahlreichen Teilnehmern. Über die Leitungen des Intercom-Netzwerkes werden Sprachdaten und Signalisierungsdaten oder Steuerdaten übermittelt.

Intercom-Netzwerke der bekannten Art weisen eine Vielzahl von Sprechstellen auf, die über eine Vermittlungsstelle miteinander verbunden sind. Die Verbindungen zwischen den einzelnen Teilnehmern, den sogenannten Sprechstellen, und der Vermittlungsstelle sind jeweils als eine direkte Verbindung zwischen der Vermittlungsstelle und der angeschlossenen Sprechstelle ausgebildet. Sie sind insbesondere als fest verdrahtete point-to-point-Verbindung, also Punkt-zu-Punkt-Verbindung, ausgebildet.

Der Vollständigkeit halber sei angemerkt, dass neben festverdrahteten Punkt-zu-Punkt-Verbindungen auch logische Direktverbindungen vorgesehen sein können. Eine solche logische Direktverbindung zwischen Vermittlungsstelle und Sprechstelle kann beispielsweise dadurch bereit gestellt sein, dass von der Vermittlungsstelle ein gemeinsamer Leitungsabschnitt bis zu einer Verzweigungsstelle führt, und sich dort auf zwei Leitungsarme oder Leitungszweige verzweigt, die zu den einzelnen Sprechstellen führen. Hier wird durch eine Netzwerkverwaltung dieser Y-förmig ausgestalteten Verbindungsleitung eine logische direkte Punkt-zu-Punkt-Verbindung zwischen der einzelnen Sprechstelle und der Vermittlungsstelle bereit gestellt.

Die Vermittlungsstelle schaltet, konfiguriert und administriert diese Verbindungen. So kann die Vermittlungsstelle beispielsweise dafür sorgen, dass bestimmte Sprechstellen mit anderen bestimmten Sprechstellen direkt kommunizieren können, bzw. eine Sprechstelle nach Betätigung einer Auswahltaste mit einer ausgewählten anderen Sprechstelle direkt kommunizieren kann.

Die Vermittlungsstelle ist sozusagen das Schaltwerk des Intercom-Netzwerkes, welches sämtliche Verbindungswege konfiguriert.

An der Sprechstelle ist eine Vielzahl von Auswahltasten vorgesehen. Infolge einer Betätigung einer bestimmten Auswahltaste wird über die Punkt-zu-Punkt-Verbindung sowohl das an dieser Sprechstelle unmittelbar eingegebene Sprachsignal an die Vermittlungsstelle übertragen, als auch ein Signalisierungs- oder Steuersignal, welches der Vermittlungsstelle die Information übermittelt, welche Auswahltaste an dieser Sprechstelle betätigt worden ist. Das Signalisierungs- oder Steuersignal kann also ein Auswahltasten-Identifizierungssignal umfassen.

Nach Erhalt und in Kenntnis dieses Auswahltasten-Identifizierungssignals kann die Vermittlungsstelle das von dieser Sprechstelle empfangene Audio-Signal einer Ziel-Sprechstelle zuordnen, und an diese weiterleiten.

Es besteht auch die Möglichkeit, dass die an der Sprechstelle eingegebenen Audio-Signale zugleich an mehrere andere Sprechstellen weitergeleitet werden. Umgekehrt ist es möglich, dass von mehreren Sprechstellen Audio-Signale zeitgleich gesammelt, und überlagert an eine oder mehrere Ziel-Sprechstellen weitergeleitet werden. Letzteres wird typischerweise "Gruppenruf" genannt.

Intercom-Netzwerke der gattungsgemäßen Art werden in Rundfunkanstalten oder Fernsehanstalten eingesetzt. Sie werden aber beispielsweise auch in Schauspielhäusern sowie bei Veranstaltungen genutzt, insbesondere bei Sportveranstaltungen oder Musikveranstaltungen, oder im Rahmen von sonstigen, zum Beispiel Live-Bericht-Erstattungen.

Intercom-Netzwerke des Standes der Technik sind regelmäßig als geschlossene Systeme ausgebildet. Ein gattungsgemäßes Intercom-Netzwerk des Standes der Technik weist wenigstens eine Vermittlungsstelle und mehrere Sprechstellen als Teilnehmer auf. Eine Vermittlungsstelle wird auch als Matrix bezeichnet.

Kommunikationsnetzwerke, die nicht als Intercom-Netzwerke anzusehen sind, sind in den Dokumenten DE 10 2006 033 295 A1, US 2011/206211 A1, US 2004/109552 A1 und EP 1 487 186 A1 offenbart und beschrieben. Es handelt sich hierbei sämtlich um gattungsfremden Stand der Technik.

In der DE 10 2006 033 295 A1 ist ein Netzwerk 6 beschrieben, das ein BUS-System verwendet. Hier ist keine Vermittlungsstelle vorgesehen, sondern eine Mehrzahl von Switches. Diese Druckschrift zeigt nicht, dass von jeder an einem Switch angeschlossenen Sprechstelle eine Verbindungsleitung zu einer Vermittlungsstelle verläuft, die jeweils eine direkte Verbindung zwischen einer Sprechstelle und einer Vermittlungsstelle bereitstellt. In den rechten Figurenhälften der Figuren 7 und 8 der Druckschrift sind Intercom-Netzwerke der gattungsgemäßen Art dargestellt, an die über eine RJ45-Netzwerkschnittstelle ein Netzwerk 6 gemäß dieser Druckschrift über ein BUS-System angeschlossen ist. Die Druckschrift zeigt auch nicht, dass eine Sprechstelle einen Anschluss für eine zweite Verbindungsleitung aufweist, über die die Sprechstelle mit derselben Vermittlungsstelle oder mit einer anderen Vermittlungsstelle verbunden ist.

Aus der US 2011/206211 A1 geht ebenfalls kein gattungsgemäßes Intercom-Netzwerk hervor. Insbesondere zeigt diese Druckschrift keine Sprechstelle, die einen Anschluss für eine zweite Verbindungsleitung aufweist, über die die Sprechstelle mit derselben Vermittlungsstelle oder mit einer anderen Vermittlungsstelle verbunden ist.

Aus der US 2004/109552 A1 geht ein System zur Telefonie-Unterstützung hervor, das Telefonie über ein LAN-Netzwerk bewerkstelligt. Es ist dort ebenfalls kein Intercom-Netzwerk der gattungsgemäßen Art beschrieben, bei dem eine Vielzahl von Sprechstellen und eine Vermittlungsstelle vorgesehen ist.

Aus der EP 1 487 186 A1 geht ebenfalls kein gattungsgemäßes Intercom-Netzwerk hervor, sondern eine Kommunikationsanordnung, die als Sprachdatennetz bezeichenbar ist. Hier fehlt es ebenfalls an einer Vermittlungsstelle. Auch zeigt die Druckschrift nicht, dass von jeder an eine Vermittlungsstelle angeschlossenen Sprechstelle eine Verbindungsleitung zu der Vermittlungsstelle verläuft. Schließlich zeigt diese Druckschrift keine Sprechstelle mit einem Anschluss für eine zweite Verbindungsleitung, über die die Sprechstelle mit derselben Vermittlungsstelle oder einer anderen Vermittlungsstelle verbunden ist.

Gattungsgemäße Intercom-Netzwerke des Standes der Technik werden insbesondere mit einer sternförmigen Netzarchitektur aufgebaut. Dies bedeutet, dass von einer Vermittlungsstelle alle Verbindungsleitungen sternförmig als fest verdrahtete Punkt-zu-Punkt-Verbindungen zu den einzelnen Teilnehmern verlaufen.

Es ist aber auch bekannt, Intercom-Netzwerke auszubilden, die zwei oder mehr Vermittlungsstellen aufweisen. Hier gehen von jeder Vermittlungsstelle insbesondere sternförmige Verbindungsleitungen als feste Punkt-zu-Punkt-Verdrahtungen zu den einzelnen, angeschlossenen Sprechstellen ab. Die mehreren Vermittlungsstellen sind direkt miteinander verbunden. Jede Sprechstelle ist aber nur mit einer Vermittlungsstelle verbunden.

Die Audio-Kommunikation einer Sprechstelle, die an eine erste Vermittlungsstelle angeschlossen ist, mit einer anderen Sprechstelle, die an eine andere Vermittlungsstelle angeschlossen ist, erfolgt hier immer auf die Weise, dass die Audiosignale über beide Vermittlungsstellen hinweg vermittelt werden. Eine solche Systemarchitektur eines Intercom-Netzwerkes ist im Hinblick auf den damit verbundenen administrativen Aufwand nur in bestimmten Anwendungsfällen einsetzbar.

Eine Kommunikation zwischen Sprechstellen unterschiedlicher Vermittlungsstellen ist für den Fall, dass die den Sprechstellen zugeordneten Vermittlungsstellen nicht miteinander verbunden sind, nicht möglich.

Es besteht der Bedarf, dass in Intercom-Netzwerken der gattungsgemäßen Art in bestimmten Anwendungssituationen eine Bedienperson einer Sprechstelle, die an eine erste Vermittlungsstelle angeschlossen ist, mit einer Bedienperson einer Sprechstelle, die an einer zweiten Vermittlungsstelle angeschlossen ist, direkt in Verbindung treten kann.

Der Erfindung stellt sich die Aufgabe, ein Intercom-Netzwerk bereit zu stellen, welches eine solche Kommunikation ermöglicht.

Die Erfindung löst die Aufgabe mit den Merkmalen des Anspruches 1.

Gemäß der Erfindung wird ein Intercom-Netzwerk bereitgestellt, bei dem mindestens eine Sprechstelle einen Anschluss für eine zweite Verbindungsleitung aufweist.

Die erste Verbindungsleitung ist die Verbindungsleitung, über die die Sprechstelle mit der Vermittlungsstelle verbunden ist.

Über die zweite Verbindungsleitung ist die Sprechstelle mit der selben Vermittlungsstelle oder mit einer anderen Vermittlungsstelle verbunden.

Für den Fall, dass die Sprechstelle mit der selben Vermittlungsstelle über die erste Verbindungsleitung und über die zweite Verbindungsleitung verbunden ist, besteht erfindungsgemäß die Möglichkeit, ein völlig redundantes Intercom-Netzwerk bereitzustellen. Damit wird die Ausfallsicherheit erhöht.

Für den Fall, dass die Sprechstelle über die erste Verbindungsleitung mit einer ersten Vermittlungsstelle und über die zweite Verbindungsleitung mit einer zweiten Vermittlungsstelle des selben Intercom-Netzwerkes oder eines anderen Intercom-Netzwerkes verbunden ist, kann eine erhebliche Verbesserung der Anwendungssituation erreicht werden. Beispielsweise werden hierdurch Remote-Anwendungen möglich.

Andererseits können Teilnehmer des Intercom-Netzwerkes, also Bediener einer Sprechstelle, zugleich in unterschiedlichen Intercom-Netzwerken arbeiten und kommunizieren.

Beispielsweise ist möglich, dass zwei Ü-Wagen (Ü-Wagen = Übertragungswagen) zwei unterschiedliche Fußballspiele übertragen. Ein Teilnehmer, der an einer Sprechstelle arbeitet, kann mit Vermittlungsstellen in den beiden unterschiedlichen Ü-Wagen verbunden sein. So kann beispielsweise ein Kommentator beide Spiele sukzessive kommentieren.

Die zweite Verbindungsleitung ist vorzugsweise als direkte Punkt-zu-Punkt-Verbindung mit einer Festverdrahtung vorgesehen.

Wie eingangs erläutert, kann die zweite Verbindungsleitung - im übrigen genauso wie die erste Verbindungsleitung - aber auch als logische direkte Punkt-zu-Punkt-Verbindung zwischen der Sprechstelle und der angeschlossenen Vermittlungsstelle oder den angeschlossenen Vermittlungsstellen bereitgestellt sein.

Insbesondere ermöglicht die Erfindung gemäß einer Ausführungsform eine direkte Kommunikation von unterschiedlichen Sprechstellen miteinander, die an unterschiedliche Vermittlungsstellen angeschlossen sind.

Das Prinzip der Erfindung besteht darin, Sprechstellen über die zweite Verbindungsleitung, die von der ersten Verbindungsleitung gesondert ausgebildet ist, mit einer Vermittlungsstelle zu verbinden. Die Sprechstelle kann also mit der selben Vermittlungsstelle zweifach redundant verbunden sein, oder mit zwei unterschiedlichen Vermittlungsstellen verbunden sein.

Die Verwaltung und Administration der Anschlüsse der Sprechstellen wird von der jeweiligen Vermittlungsstelle geleitet, an die die Sprechstelle über die entsprechende Verbindungsleitung angeschlossen ist. Insbesondere kann für den Fall, dass eine Sprechstelle an zwei Vermittlungsstellen angeschlossen ist, die Verwaltung des Anschlusses für die erste Verbindungsleitung durch die erste Vermittlungsstelle, und die Verwaltung des Anschlusses für die zweite Verbindungsleitung durch die zweite Vermittlungsstelle erfolgen.

Die zweite Verbindungsleitung kann - wie die erste Verbindungsleitung - jede Art von Leitung sein, die eine Übermittlung von Audio-Daten ermöglicht. Als erste oder zweite Verbindungsleitung kann beispielsweise auch eine Telefonleitung oder eine Internetleitung, insbesondere unter Verwendung eines VOIP-Protokolls, in Frage kommen.

Gemäß der Erfindung ermöglicht die zweite Verbindungsleitung auch eine Weitverkehrs-Anbindung einer Sprechstelle an zwei unterschiedlichen Vermittlungsstellen. Als Weitverkehrs-Anbindung wird insbesondere angesehen, wenn die beiden, an die Sprechstelle angeschlossenen Vermittlungsstellen über große Distanzen voneinander entfernt angeordnet sind, insbesondere über Distanzen von mehr als 1 km, weiter insbesondere von mehr als 5 km.

Von der Erfindung ist auch umfasst, wenn von der Sprechstelle über die erste und/oder zweite Verbindungsleitung an die beiden angeschlossenen Vermittlungsstellen Statussignale übermittelt werden. So kann beispielsweise beim Einschalten der Sprechstelle an die angeschlossene Vermittlungsstelle eine Information übermittelt werden, in welchem Betriebsmodus die Sprechstelle sich gerade befindet, also ob sie eine Kommunikation über die erste Verbindungsleitung oder über die zweite Verbindungsleitung durchführt.

Insoweit kann beispielsweise eine Informationen über einen Bereitschaftsmodus von einer Sprechstelle an die jeweilige, an die Sprechstelle angeschlossene Vermittlungsstelle übermittelt werden, und von der Vermittlungsstelle verwaltet werden. Eine solche Bereitschaftsinformation kann beispielsweise an alle anderen Bedienpersonen von Sprechstellen, die an die eine oder die andere Vermittlungsstelle angeschlossen sind, übermittelt werden, so dass alle Teilnehmer Kenntnis erlangen oder erlangen können, dass die Bedienperson dieser bestimmten Sprechstelle ansprechbereit ist.

Die beiden an die Sprechstelle angeschlossen Vermittlungsstellen können also nachhalten, welche Sprechstellen gerade an sie angeschlossen sind, in welchem Betriebsmodus sie sich befinden, und von welcher Bedienperson sie besetzt sind. Bei einer Variante der Erfindung kann auch vorgesehen sein, dass eine erste, mit der Sprechstelle verbundene Vermittlungsstelle eine Information von der Sprechstelle darüber erhalten kann, mit welcher anderen Vermittlungsstelle diese Sprechstelle über die zweite Verbindungsleitung verbunden ist.

Auch kann beispielsweise der Name einer Bedienperson über die Sprechstelle eingegeben, und an die beiden mit dieser Sprechstelle verbunden Vermittlungsstellen weitergegeben werden, und von den Vermittlungsstellen verwaltet werden.

Von der Erfindung umfasst sind solche Intercom-Netzwerke, bei denen von einer Vermittlungsstelle die Verbindungsleitungen zu den einzelnen Sprechstellen als direkte, festverdrahtete, Punkt-zu-Punkt-Verbindung verlaufen, wobei sich insofern insbesondere eine sternförmige Leitungsarchitektur ergibt. Von der Erfindung sind aber auch umfasst Intercom-Netzwerke, bei denen von einer Vermittlungsstelle erste und zweite Verbindungsleitungen zu den einzelnen Sprechstellen verlaufen.

Vorteilhaft ist vorgesehen, dass die Erfindung die Möglichkeit bereit stellt, dass eine Bedienperson einer Sprechstelle unter Zuhilfenahme eines Displays an der Sprechstelle oder eines der Sprechstelle zugeordneten Displays, beispielsweise eine Information erhalten kann, ob ein bestimmter Teilnehmer, der sich an einer Sprechstelle, die an eine Vermittlungsstelle angeschlossen ist, gerade verfügbar ist.

Im Rahmen der Erfindung kann eine Bedienperson einer Sprechstelle zum Beispiel bei Live-Veranstaltungen, während der schnelle Rückfragen auch bei anderen Bedienpersonen von Sprechstellen, die an eine andere Vermittlungsstelle angeschlossen sind, in höchstem Maße wünschenswert sind, auf diese Weise eine einfache und schnelle Rücksprache mit einer Bedienperson an einer anderen Sprechstelle halten.

Die Erfindung ermöglicht die Kommunikation der Sprechstelle, die an die erste Vermittlungsstelle angeschlossen ist, mit sämtlichen an diese Vermittlungsstelle angeschlossenen Teilnehmern, und zugleich die Kommunikation dieser Sprechstelle über die zweite Verbindungsleitung mit allen Teilnehmern, die an die zweite Vermittlungsstelle angeschlossen sind.

Die Sprechstelle umfasst jeweils einen Lautsprecher und ein Mikrofon. Das Mikrofon dient dazu, über eine Bedienperson Audio-Daten in das Netzwerk einzuspeisen. Der Lautsprecher ermöglicht der Bedienperson an der Sprechstelle, empfangene Audio-Daten auszugeben.

Gemäß einer vorteilhaften Ausgestaltung der Erfindung weist eine Sprechstelle jeweils Auswahltasten auf, wobei mittels Betätigung einer Auswahltaste durch eine Bedienperson eine unmittelbare Audio-Verbindung zwischen dieser Sprechstelle und einer infolge einer Betätigung einer Auswahltaste ausgewählten Sprechstelle des Intercom-Netzwerkes über die Vermittlungsstelle bewerkstelligbar ist. Die Sprechstelle weist also mehrere Auswahlmöglichkeiten auf, um diese Sprechstelle mit anderen Sprechstellen dieses Intercom-Netzwerkes durch einfache Betätigung der Auswahltasten zu verbinden.

Angemerkt sei dabei, dass jede Sprechstelle über die jeweilige Verbindungsleitung immer nur mit einer Vermittlungsstelle verbunden ist. Eine Punkt-zu-Punkt-Verbindung im Sinne einer Fest-Verdrahtung, oder jedenfalls im Sinne einer direkten Verbindung, ermöglicht eine sichere Kommunikation einer Sprechstelle direkt mit einer anderen Sprechstelle über die Vermittlungsstelle. Eine Sprechstelle kann - soweit von der Vermittlungsstelle zugelassen - auch zugleich mit zwei oder mehreren anderen Sprechstellen kommunizieren.

Eine Sprechstelle weist vorzugsweise mehrere Auswahltasten, nach Art von Zielwahltasten, auf. Die den einzelnen Auswahltasten zugeordneten elektrischen Leitungen laufen in einer gemeinsamen Leitung, nämlich der Verbindungsleitung, zusammen. Genau genommen, sind die mehreren Auswahltasten gemeinsam mit dem an dem Teilnehmer angeordneten Anschluss für die Verbindungsleitung verbunden.

Gemäß der Erfindung ist an der Sprechstelle eine erste Gruppe von Auswahltasten, nach Art von Zielwahltasten, angeordnet, die in einer ersten Verbindungsleitung zusammenlaufen, und eine zweite Gruppe von Auswahltasten, nach Art von Zielwahltasten, die in der zweiten Verbindungsleitung zusammenlaufen.

Die Vermittlungsstelle kann über Signalisierungsdaten, nämlich das zuvor erwähnte Auswahltasten-Identifizierungssignal, erkennen, welche der mehreren Auswahltasten von der Bedienperson an der Sprechstelle betätigt worden ist, und entsprechend die gewünschte Verschaltung herstellen.

Gemäß einer vorteilhaften Ausgestaltung der Erfindung weist die Sprechstelle eine Verbindungsleitung-Auswahltaste auf. Mittels Betätigung der Verbindungsleitungs-Auswahltaste durch einen Bediener, kann eine unmittelbare Audio-Verbindung zwischen der Sprechstelle und einer ausgewählten Sprechstelle je nach Auswahl entweder über die erste Verbindungsleitung oder über die zweite Verbindungsleitung bewerkstelligt werden. Für den Fall, dass die beiden Verbindungsleitungen mit unterschiedlichen Vermittlungsstellen verbunden sind, kann durch eine entsprechende Betätigung der Verbindungsleitung-Auswahltasten entweder auf eine an die erste Vermittlungsstelle angeschlossene Mehrzahl von Sprechstellen, oder auf an eine an die zweite Vermittlungsstelle angeschlossene Mehrzahl von Sprechstellen zugegriffen werden.

Gemäß einer vorteilhaften Ausgestaltung der Erfindung weist eine Sprechstelle jeweils ein Display auf, auf dem Informationen anzeigbar sind, die die Sprechstelle über die erste Verbindungsleitung, und/oder über die zweite Verbindungsleitung von der jeweils angeschlossenen Vermittlungsstelle erhält. Beispielsweise kann hierzu die Information gehören, welche Sprechstellen derzeit an das Netzwerk oder an die jeweilige Vermittlungsstelle angeschlossen sind, oder welche Vermittlungsstellen derzeit an die Sprechstelle angeschlossen sind, oder welche Bedienpersonen derzeit online oder verfügbar sind.

Es genügt allerdings, wenn ein solches Display der Sprechstelle zugeordnet ist. Beispielsweise kann das Display auch von einem Smartphone bereit gestellt sein, welches - ggf. auch nur temporär - an die Sprechstelle anschließbar ist.

Weiter vorteilhaft ist vorgesehen, dass eine Sprechstelle jeweils ein User-Interface aufweist, also eine Schnittstelle, die eine Eingabe von Informationen durch die Bedienperson der Sprechstelle zum Zwecke der Weiterleitung über die erste Verbindungsleitung und/oder über die zweite Verbindungsleitung an die jeweils angeschlossene Vermittlungsstelle ermöglicht. Als Eingabe von Informationen wird insbesondere auch eine Möglichkeit einer Auswahl von Informationen verstanden, die von der jeweiligen angeschlossenen Vermittlungsstelle bereitgestellt worden sind.

Gemäß einer weiteren vorteilhaften Ausgestaltung der Erfindung weist die Sprechstelle einen ersten Verbindungsleitungsanschluss und einen zweiten Verbindungsleitungsanschluss auf. Der erste Verbindungsleitungsanschluss und der zweite Verbindungsleitungsanschluss können jeweils als physikalischer Anschluss ausgebildet sein.

Im Falle einer physikalischen Ausbildung des ersten Verbindungsleitungsanschlusses und/oder des zweiten Verbindungsleitungsanschlusses bedeutet dies, dass hier ein gesonderter Verbinder, insbesondere ein Steckverbinder, zum Beispiel eine BNC-Buchse, oder ein anderer Steckverbinder, vorgesehen ist. Der zweite Verbindungsleitungsanschluss ist dann zum Beispiel als Steckverbinder-Anschluss so ausgestaltet, dass er körperlich oder physikalisch getrennt oder gesondert von dem ersten Verbindungsleitungs-Anschluss ausgebildet ist.

Im Falle einer alternativen Ausgestaltung der Erfindung ist der Verbindungsleitungs-Anschluss als logischer Anschluss ausgebildet. Logischer Anschluss bedeutet, dass innerhalb der Sprechstelle ein gesonderter Leitungsweg, beispielsweise zu einem Verwaltungs-Baustein, bereit gestellt ist, der eine Kommunikation dieser Sprechstelle über die zweite Verbindungsleitung mit demselben oder einer weiteren Vermittlungsstelle ermöglicht.

Bei dieser Variante der Erfindung ist beispielsweise an einer Sprechstelle lediglich ein einziger körperlicher oder physikalischer Anschluss, nämlich zur Verbindung der Sprechstelle mit nur einer Verbindungsleitung, vorgesehen.

Gemäß einem weiteren Aspekt der Erfindung besteht die Aufgabe, eine Sprechstelle bereit zu stellen, die zur Verwendung in einem vorbeschriebenen Intercom-Netzwerk geeignet ist.

Die Erfindung löst diese Aufgabe mit den Merkmalen des Anspruches 14.

Ausgehend von einer Sprechstelle der gattungsgemäßen Art besteht die erfindungsgemäße Besonderheit darin, dass die erfindungsgemäße Sprechstelle - zusätzlich zu einem ersten Anschluss zur Verbindung mit einer ersten Vermittlungsstelle - einen zweiten Anschluss zur Verbindung mit einer zweiten Vermittlungsstelle über eine zweite Verbindungsleitung oder zur Verbindung mit der selben Vermittlungsstelle über eine zweite Verbindungsleitung, die von der ersten Verbindungsleitung unabhängig ist, aufweist.

Der an der Sprechstelle angeordnete zweite Verbindungsleitungs-Anschluss kann als physikalischer, das heißt als körperlich vorhandener Anschluss, zum Beispiel im Sinne eines Steckverbinders, oder eines Steckers, oder einer Buchse, ausgebildet sein. Ein solcher körperlich vorhandener Anschluss kann gesondert oder getrennt von dem ebenfalls vorhandenen körperlichen oder physikalischen ersten Anschluss an der Sprechstelle zur Verbindung der Sprechstelle mit der Vermittlungsstelle über die erste Verbindungsleitung vorgesehen sein.

Von der Erfindung ist allerdings alternativ auch umfasst, dass die Sprechstelle gemäß der Erfindung einen zweiten Verbindungsleitungs-Anschluss aufweist, der als logischer Anschluss ausgebildet ist. Dieser logische Anschluss kann infolge einer internen, innerhalb der Sprechstelle vorhandenen Verschaltung oder Verdrahtung vorgesehen sein. Der logische Anschluss kann eine körperliche Verbindung, das heißt eine leitungstechnische oder schalttechnische Verbindung zu der körperlich vorhandenen zweiten Verbindungsleitung zwischen Sprechstelle und der zweiten Vermittlungsstelle aufweisen.

Im Übrigen wird bezüglich der Vorteile der einzelnen Merkmale zur Vermeidung von Wiederholungen auf die obigen Anmerkungen verwiesen, die zu einem erfindungsgemäßen Intercom-Netzwerk getroffen worden sind.

Angemerkt sei an dieser Stelle, dass die Auswahltasten selbstverständlich - wie an sich im Stand der Technik bekannt - auch programmierbar ausgestaltet sein können. Bei anderen Varianten der Erfindung sind die Tastenfelder der Auswahltasten beschriftbar.

Gemäß einer vorteilhaften Ausgestaltung der Erfindung ist der Sprechstelle ein Display zugeordnet. Weiter vorteilhafterweise ist ein solches Display an der Sprechstelle angeordnet.

Das Display kann beispielsweise auch von einem gesonderten Gerät bereitgestellt werden, welches nur temporär mit der Sprechstelle verbunden ist.

Auf dem Display sind Informationen anzeigbar, die die Sprechstelle über die zweite Verbindungsleitung erhält.

Zu den angezeigten Informationen können beispielsweise Informationen gehören betreffend eine Mitteilung, welche Sprechstellen an das Netzwerk angeschlossen sind, oder welche Sprechstellen sich in Kommunikationsbereitschaft befinden.

Gemäß einer weiteren vorteilhaften Ausgestaltung der Erfindung ist vorgesehen, dass der Sprechstelle ein Display zugeordnet ist, auf dem Informationen anzeigbar sind, die die Sprechstelle über die erste Verbindungsleitung und/oder über die zweite Verbindungsleitung erhält.

Gemäß einer weiteren vorteilhaften Ausgestaltung ist der Sprechstelle ein User-Interface zugeordnet. Dieses kann eine Eingabe von Informationen durch eine Bedienperson ermöglichen. Diese Informationen können beispielsweise der Übermittlung über die zweite Verbindungsleitung dienen. Beispielsweise kann an der Sprechstelle ein Name der Bedienperson eingegeben sein. Über die zweite Verbindungsleitung kann der eingegebene Name dann anderen Sprechstellen über die zweite Vermittlungsstelle mitgeteilt werden. Auf diese Weise wissen Bedienpersonen anderer Sprechstellen, dass eine bestimmte Bedienperson dieser Schnittstelle gerade angeschlossen ist, und sich beispielsweise in Kommunikationsbereitschaft befindet.

Vorteilhafterweise weist die Sprechstelle ein solches User-Interface direkt auf. In diesem Fall ist das User-Interface an der Sprechstelle angeordnet. Das User-Interface kann beispielsweise eine Eingabe eines Zahlencodes ermöglichen. Es kann sich aber auch um ein alphanumerisches User-Interface, einen Touchscreen, oder dergleichen handeln.

Gemäß einer weiteren vorteilhaften Ausgestaltung der Erfindung ist vorgesehen, dass der Sprechstelle ein User-Interface zugeordnet ist, insbesondere, dass die Sprechstelle ein User-Interface aufweist, das eine Eingabe von Informationen durch eine Bedienperson, insbesondere eine Auswahl von bereitgestellten Informationen durch eine Bedienperson, zum Zwecke der Übermittlung der Informationen über die erste Verbindungsleitung und/oder über die zweite Verbindungsleitung ermöglicht.

Gemäß einer weiteren vorteilhaften Ausgestaltung der Erfindung weist die Sprechstelle eine Anzeige auf, die der Bedienperson der Sprechstelle signalisieren kann, in welchem Betriebsmodus sich die Sprechstelle befindet. Beispielsweise kann die Anzeige der Bedienperson anzeigen, dass sich die Bedienperson gerade in Kommunikation mit einer weiteren Sprechstelle über die erste Verbindungsleitung oder über die zweite Verbindungsleitung oder gerade in Kommunikationsbereitschaft mit einem von einer ersten Vermittlungsstelle organisierten Netzwerk oder mit einem von einer zweiten Vermittlungsstelle organisierten Netzwerk befindet.

Gemäß einer weiteren vorteilhaften Ausgestaltung der Erfindung ist vorgesehen, dass die Sprechstelle eine Anzeige aufweist, die einer Bedienperson der Sprechstelle als Betriebsmodus anzeigt, dass sich diese Sprechstelle in Kommunikation oder in Kommunikationsbereitschaft mit einer weiteren Sprechstelle über die die erste Verbindungsleitung und/oder über die zweite Verbindungsleitung befindet.

Weitere Vorteile der Erfindung ergeben sich aus den nicht zitierten Unteransprüchen, sowie aus der nachfolgenden Beschreibung der in den Figuren dargestellten Ausführungsbeispiele.

In den Figuren zeigen:
- Fig. 1: in einer schematischen, blockschaltbildartigen Ansicht ein erstes Intercom-Netzwerk und ein zweites Intercom-Netzwerk des Standes der Technik,
- Fig. 2: in einer Darstellung vergleichbar der Fig. 1 ein erstes Ausführungsbeispiel eines erfindungsgemäßen Intercom-Netzwerks, wobei eine Sprechstelle über eine erste Verbindungsleitung mit einer ersten Vermittlungsstelle und über eine zweite Verbindungsleitung mit einer zweiten Vermittlungsstelle verbunden ist.
- Fig. 3: in einer Darstellung gemäß Fig. 2 ein weiteres Ausführungsbeispiel eines erfindungsgemäßen Intercom-Netzwerkes, bei dem die beiden Vermittlungsstellen auch direkt miteinander verbunden sind,
- Fig. 4: ein weiteres Ausführungsbeispiel eines erfindungsgemäßen Intercom-Netzwerkes in einer Darstellung gemäß Fig. 2, wobei die an die erste Vermittlungsstelle angeschlossenen Sprechstellen jeweils über die erste Verbindungsleitung und über die zweite Verbindungsleitung mit der selben Vermittlungsstelle zur Bereitstellung eines redundanten Intercom-Netzwerkes verbunden sind,
- Fig. 5: ein weiteres Ausführungsbeispiel eines erfindungsgemäßen Intercom-Netzwerkes, ähnlich dem Ausführungsbeispiel der Fig. 2, wobei hier im Unterschied zur Fig. 2 kein physikalischer erster Verbindungsleitungsanschluss und ein davon gesonderter zweiter physikalischer Verbindungsleitungsanschluss vorgesehen sind, sondern der zweite Verbindungsleitungsanschluss als logischer Anschluss ausgebildet ist,
- Fig. 6: in einer schematischen Vorderansicht ein erstes Ausführungsbeispiel einer erfindungsgemäßen Sprechstelle,
- Fig. 7: eine Rückansicht der Sprechstelle der Fig. 6 in einer schematischen Ansicht mit zwei gesonderten physikalischen Anschlüssen, also einem ersten Verbindungsleitungsanschluss und einem davon gesondert ausgebildeten zweiten Verbindungsleitungsanschluss, die jeweils als physikalische Anschlüsse ausgebildet sind,
- Fig. 8: ein weiteres Ausführungsbeispiel einer erfindungsgemäßen Sprechstelle in einer Darstellung gemäß Fig. 7, wobei hier der zweite Verbindungsleitungsanschluss als logischer Anschluss ausgebildet ist, und
- Fig. 9: ein weiteres Ausführungsbeispiel eines erfindungsgemäßen Intercom-Netzwerkes in einer Darstellung gemäß Fig. 4, wobei dieses Intercom-Netzwerk vollständig redundant ausgebildet ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

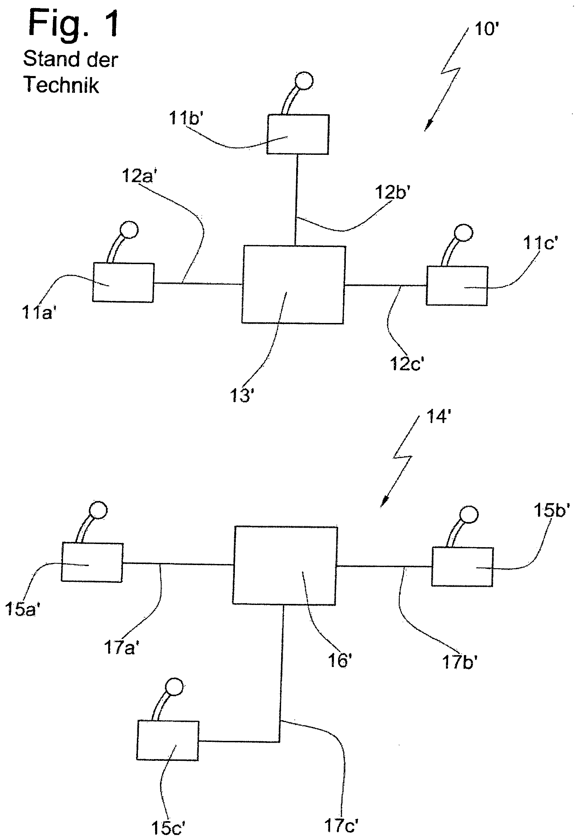

Bei der Veranschaulichung eines Intercom-Netzwerkes des Standes der Technik gemäß Fig. 1 wurden der Übersichtlichkeit halber solche Teile oder Elemente, die sich auch bei Ausführungsbeispielen der Erfindung finden, dort mit einem zusätzlichen Apostroph gekennzeichnet.

Ausweislich Fig. 1 wird zunächst ein Intercom-Netzwerk 10' des Standes der Technik erläutert:
Fig. 1 zeigt ein erstes Intercom-Netzwerk 10' des Standes der Technik, sowie ein zweites Intercom-Netzwerk 14' des Standes der Technik.

Das erste Intercom-Netzwerk 10' umfasst eine Vermittlungsstelle 13', an der beispielhaft dargestellt, drei Teilnehmer in Form von Sprechstellen 11a', 11b' und 11c' angeschlossen sind. Jede der Sprechstellen ist unter Bereitstellung einer sternförmigen Netz-Architektur jeweils über eine erste Verbindungsleitung 12a', 12b', 12c' mit der Vermittlungsstelle 13' verbunden.

Die Vermittlungsstelle 13' stellt sozusagen eine Zentrale dieses Intercom-Netzwerkes 10' dar.

Die Verbindung zwischen der jeweiligen Sprechstelle 11a', 11b' und 11c' und der Vermittlungsstelle 13' ist bei diesem Ausführungsbeispiel unter Zuhilfenahme einer insbesondere fest verdrahteten Punkt-zu-Punkt-Verbindung (point-to-point-Verbindung) ausgestaltet. Hierdurch wird eine hohe Betriebssicherheit gewährleistet.

In der Vermittlungsstelle 13' wird die Konfiguration und Schaltung dieser Punkt-zu-Punkt-Verbindungen vorgenommen.

Jede der Sprechstellen 11a', 11b' und 11c' weist ein Mikrofon und einen Lautsprecher auf.

Außerdem sind an jeder Sprechstelle mehrere Auswahltasten vorgesehen, die es einer Bedienperson der jeweiligen Sprechstelle ermöglichen, mit einer anderen Sprechstelle unmittelbar eine Audio-Verbindung herzustellen.

Das erste Intercom-Netzwerk wird mit 10' bezeichnet.

Fig. 1 zeigt darüber hinaus ein zweites, mit 14' bezeichnetes Intercom-Netzwerk.

Dieses Netzwerk weist wiederum eine Vermittlungsstelle 16', und beispielhaft dargestellt drei Sprechstellen 15a', 15b', 15c' auf, die wiederum über insbesondere festverdrahtete Punkt-zu-Punkt-Verbindungsleitungen 17a', 17b', 17c' mit der Vermittlungsstelle 16' verbunden sind.

Vorstellbar ist beispielsweise, dass das erste Intercom-Netzwerk 10' einer ersten Rundfunkanstalt und das zweite Intercom-Netzwerk 14' einer zweiten Rundfunkanstalt zugehörig ist.

Zwischen diesen beiden unterschiedlichen Intercom-Netzwerken 10', 14' besteht im Stand der Technik keinerlei Kommunikationsmöglichkeit. Insbesondere kann ein Benutzer einer Sprechstelle, zum Beispiel der Sprechstelle 11a' des ersten Intercom-Netzwerks 10', keine Verbindung zu einer Sprechstelle des zweiten Intercom-Netzwerks 14' herstellen.

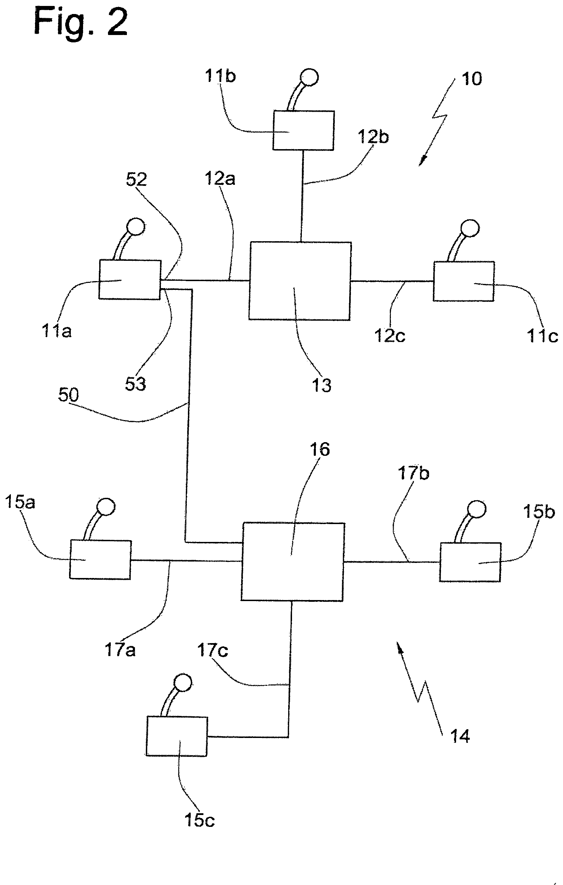

Anhand des ersten Ausführungsbeispiels der Erfindung nach Fig. 2 soll erläutert werden, wie eine Sprechstelle 11a über eine erste Verbindungsleitung 12a mit einer ersten Vermittlungsstelle 13 eines ersten Intercom-Netzwerkes 10 und über eine zweite Verbindungsleitung 50 mit einer zweiten Vermittlungsstelle 16 eines zweiten Intercom-Netzwerkes 14 verbunden ist.

Die erfindungsgemäße Sprechstelle 11a kann somit sowohl Bestandteil des ersten, von der ersten Vermittlungsstelle 13 administrierten Intercom-Netzwerkes 10, als auch Bestandteil des zweiten, von der zweiten Vermittlungsstelle 16 administrierten Intercom-Netzwerkes 14 sein.

Die Sprechstelle 11a kann insoweit über die erste Verbindungsleitung 12a mit allen an die erste Vermittlungsstelle 13 angeschlossenen Teilnehmern 11b und 11c kommunizieren, und über die zweite Verbindungsleitung 50 mit allen an die zweite Vermittlungsstelle 16 angeschlossenen Teilnehmern 15a, 15b, 15c kommunizieren.

Ausweislich Fig. 2 weist das Intercom-Netzwerk 10 gemäß der Erfindung eine erste Sprechstelle 11a, eine zweite Sprechstelle 11b, und eine dritte Sprechstelle 11c auf. Die Zahl der Sprechstellen ist beliebig und hängt von der Art und der Verwendung des jeweiligen Intercom-Netzwerkes 10 ab.

Die Sprechstellen sind jeweils über erste Verbindungsleitungen 12a, 12b, 12c mit der Vermittlungsstelle 13 des ersten Intercom-Netzwerkes 10 verbunden.

Wiederum handelt es sich insbesondere um festverdrahtete Punkt-zu-Punkt-Verbindungen, die eine hohe Betriebssicherheit gewährleisten. In der Vermittlungsstelle 13 wird die entsprechende Verwaltung und Verschaltung vorgenommen. Auch findet in der Vermittlungsstelle 13 eine entsprechende Konfiguration statt, die beispielsweise festlegt, welche der einzelnen, an die Vermittlungsstelle 13 angeschlossenen Sprechstellen 11a, 11b, 11c überhaupt mit welcher oder mit welchen der übrigen Sprechstellen 11a, 11b, 11c in Kommunikation treten kann.

Das zweite Intercom-Netzwerk 14 des Ausführungsbeispiels der Erfindung gemäß Fig. 2 umfasst eine Vermittlungsstelle 16, an die über die Verbindungsleitungen 17a, 17b, 17c ebenfalls Sprechstellen 15a, 15b, 15c angeschlossen sind.

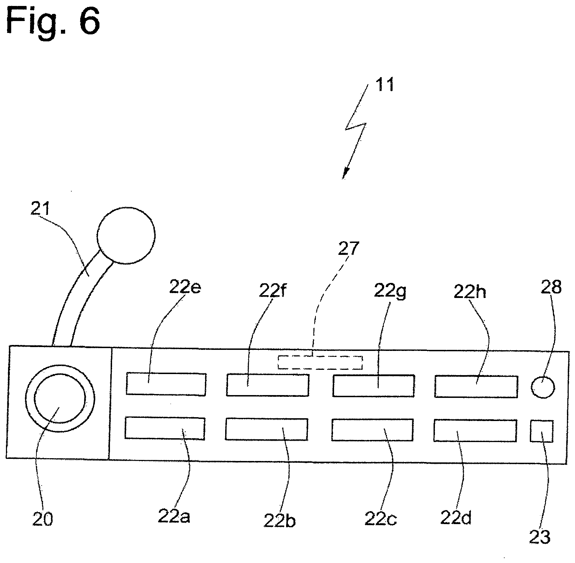

Jede der beispielhaft dargestellten Sprechstellen der Fig. 2 kann von einer später anhand der Fig. 6 bis 8 noch detaillierter beschriebenen Sprechstelle bereit gestellt sein.

Die Sprechstelle 11a des ersten Intercom-Netzwerkes 10 verfügt - im Unterschied zu der Sprechstelle 11a' des Standes der Technik der Fig. 1 - über einen ersten Verbindungsleitungsanschluss 52 und zusätzlich über einen zweiten Verbindungsleitungsanschluss 53.

Über den ersten Verbindungsleitungsanschluss 52 kann die Sprechstelle 11a über die erste Verbindungsleitung 12a mit der Vermittlungsstelle 13 verbunden werden. Über den zweiten Verbindungsleitungsanschluss 53 kann die Sprechstelle 11a über die zweite Verbindungsleitung 50 mit der zweiten Vermittlungsstelle 16 verbunden werden.

Die erste Verbindungsleitung 12a und die zweite Verbindungsleitung 50 sind beide als eine direkte Kommunikation zulassende, Punkt-zu-Punkt-Verbindung ausgestaltet.

Aufgrund dieser Netzwerkarchitektur besteht für den Nutzer der Sprechstelle 11a des Intercom-Netzwerkes 10 die Möglichkeit, auch während des Betriebs des Intercom-Netzwerkes 10 unmittelbaren Kontakt zu der Bedienperson einer Sprechstelle beider Intercom-Netzwerke 10 und 14 aufzunehmen. Andererseits hat - soweit das die entsprechende Vermittlungsstelle 13, 16 zulässt - jeder Teilnehmer beider Intercom-Netzwerke 10, 14, die Möglichkeit, mit dem Teilnehmer der Sprechstelle 11a in Kommunikation zu treten.

Unter der Annahme, dass beispielsweise das erste Intercom-Netzwerk 10 einer ersten Rundfunkanstalt zugehörig ist, und eingesetzt wird, um beispielsweise ein Fußballspiel im Rahmen einer Liveschaltung zu begleiten, und unter der Annahme, dass das zweite Intercom-Netzwerk 14 beispielsweise zum gleichen Zeitpunkt von einer anderen Rundfunkanstalt eingesetzt wird, um ein anderes Sportereignis zu begleiten, kann folgende Situation auftreten:
Bei dem Benutzer der Sprechstelle 11a kann beispielsweise das Bedürfnis bestehen, eine Information über eine bestimmte Bildeinstellungsmöglichkeit zu erfragen. Er kann des Weiteren eine Information haben, darüber, dass ein Benutzer der Sprechstelle 15c des zweiten Intercom-Netzwerkes 14 zu diesem Zeitpunkt ansprechbar ist, und diese Information erteilen kann.

Er hat nun die Möglichkeit, unmittelbar über die zweite Verbindungsleitung 50 und die zweite Vermittlungsstelle 16 auf die Sprechstelle 15c zuzugreifen, um mit dieser Sprechstelle 15c eine direkte Audio-Kommunikation zu bewerkstelligen. So kann durch eine kurze Rückfrage einer Bedienperson der Sprechstelle 11a bei der Bedienperson der Sprechstelle 15c die fehlende Information schnell übermittelt werden.

Zu den von einer ersten Sprechstelle 11a zu einer anderen Sprechstelle 15c übermittelten Audio-Daten gehört zum einen die reine Sprachinformation.

Zum anderen können Signalisierungs- oder Steuerdaten übermittelt werden, die der Vermittlung eine Identifizierung der ausgewählten Auswahltaste im Sinne einer Zieltaste ermöglicht.

Zusätzlich können über die erste Verbindungsleitungen 12 bzw. über die zweite Verbindungsleitungen 50 aber auch Steuerdaten übermittelt werden, die beispielsweise einen Einschalt- oder Ausschaltbefehl für eine Leuchte oder ein anderes elektrisches Gerät darstellen.

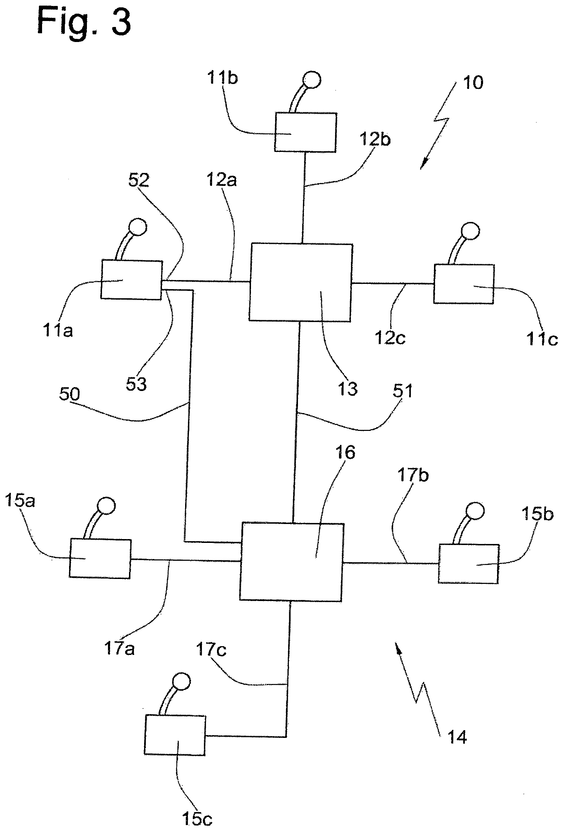

Gemäß Fig. 3 wird ein weiteres Ausführungsbeispiel der Erfindung erläutert: Dieses unterscheidet sich von dem Ausführungsbeispiel der Fig. 2 nur darin, dass die beiden Vermittlungsstellen 13, 16 über eine Vermittlungsstellenverbindungsleitung 51 unmittelbar miteinander verbunden sind. Dieses Ausführungsbeispiel berücksichtigt, dass auch Intercom-Netzwerke 10 der erfindungsgemäßen Art so ausgestaltet sein können, dass mehrere Vermittlungsstellen 13, 16 vorgesehen und unmittelbar miteinander verbunden sind.

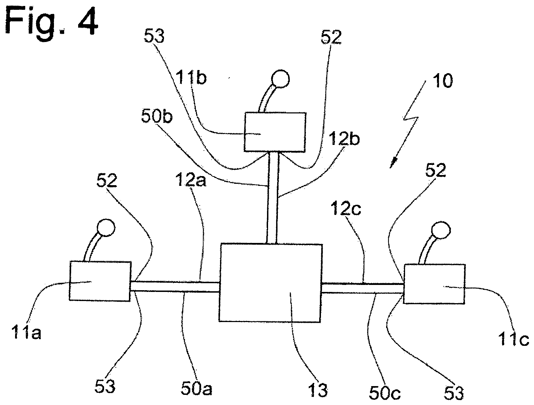

Ein weiteres Ausführungsbeispiel eines erfindungsgemäßen Intercom-Netzwerkes 10 zeigt die Fig. 4: Hier ist nur eine einzige Vermittlungsstelle 13 vorgesehen, an die beispielhaft drei Sprechstellen 11a, 11b, 11c angeschlossen sind.

Jede Sprechstelle 11a, 11b, 11c ist jeweils über eine erste Verbindungsleitung 12a, 12b, 12c mit der Vermittlungsstelle 13 verbunden.

Jede der drei Sprechstellen 11a, 11b, 11c ist allerdings zusätzlich auch jeweils über einen zweiten physikalischen Anschluss 53 und eine zweite Verbindungsleitung 50a, 50b, 50c mit der selben Vermittlungsstelle 13 verbunden.

Hierdurch kann ein redundant ausgebildetes Intercom-Netzwerk 10 bereitgestellt werden.

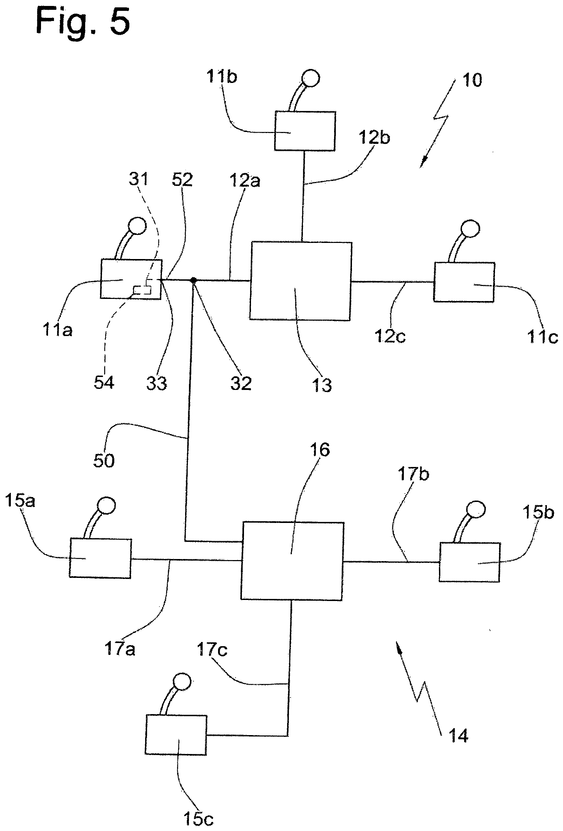

Schließlich zeigt Fig. 5 ein weiteres Ausführungsbeispiel eines erfindungsgemäßen Intercom-Netzwerkes 10: Hier sind - im Unterschied zu den vorherigen Ausführungsbeispielen - nicht zwei gesonderte physikalische Anschlüsse 52, 53, wie beispielsweise in Fig. 4 gezeigt, vorgesehen, sondern hier ist der zweite physikalische Anschluss 53 zur Verbindung der entsprechenden Sprechstelle 11a mit der zweiten Verbindungsleitung 50 als logischer zweiter Anschluss 54 ausgebildet.

Ausweislich Fig. 5 ist also auch von der Erfindung umfasst, wenn der Anschluss 53 zur Verbindung mit der zweiten Verbindungsleitung 50a als ein logischer Anschluss 54 ausgebildet ist, der über eine interne Leitung 31 oder einen entsprechenden Schaltweg über einen sogenannten logischen Anschlusspunkt 33 mit der Verbindungsleitung 12a verbunden ist.

Von der Verbindungsleitung 12a geht im Bereich einer Verzweigungsstelle 32 die zweite Verbindungsleitung 50 ab. Die Verzweigungsstelle 32 liegt als Leitungssplit an beliebiger, geeigneter Stelle zwischen der Sprechstelle 11a und der ersten Vermittlungsstelle 13.

Dem Fachmann ist aber deutlich, dass auch bei den anderen Sprechstellen (z. B. der Sprechstelle 11c oder der Sprechstelle 15c) dieses Ausführungsbeispiels oder anderer Ausführungsbeispiele eine entsprechende schalttechnische Anbindung vorgesehen sein kann.

Im Folgenden sollen Ausführungsbeispiele von erfindungsgemäß ausgebildeten Sprechstellen erläutert werden, die bei einem erfindungsgemäßen Intercom-Netzwerk 10, 14 eingesetzt werden können. Sodann soll erläutert werden, wie Informationen von dem Server an die Bedienperson der einzelnen Schnittstellen übermittelt werden.

Ausweislich der Fig. 6 weist ein Ausführungsbeispiel einer erfindungsgemäßen Sprechstelle 11 eine im Wesentlichen herkömmliche Bauform auf. Man erkennt die Sprechstelle 11 in einer Vorderansicht.

Im linken Bereich befindet sich ein Lautsprecher 20, und ein Mikrofon 21.

Die Sprechstelle 11 weist, in an sich bekannter Art und Weise, eine Vielzahl von Auswahltasten 22a, 22b, 22c, 22d, 22e, 22f, 22g, 22h auf, deren genaue Anzahl beliebig ist. Mittels dieser Auswahltasten kann die Bedienperson der Sprechstelle 11 durch Betätigung einer bestimmten Auswahltaste eine unmittelbare Hör-/ Sprechverbindung zu einer anderen Sprechstelle bewerkstelligen. Diese Verbindung wird über die insbesondere festverdrahteten Punkt-zu-Punkt-Verbindungsleitungen 12a, 12b, 12c, 12d, 17a, 17b, 17c, 17d, 50, 50a, 50b, 50c und die entsprechende Vermittlungsstelle 13, 16 bewerkstelligt.

Jede Sprechstelle kann mit einer ausgewählten Sprechstelle eine unmittelbare Gegensprechverbindung eingehen. Zugelassen sind dabei auch Gruppenrufe, beispielsweise derart, dass eine Sprechstelle mit einer Mehrzahl anderer Sprechstellen in eine gleichzeitige Gegensprechverbindung treten kann.

Die erfindungsgemäße Sprechstelle 11 gemäß Fig. 6 weist gegenüber Sprechstellen des Standes der Technik zusätzlich eine Auswahltaste 23 auf, mit der der Sprechstelle 11 ein unmittelbarer Zugang zur Sprechstelle eines anderen Intercom-Netzwerkes 14 ermöglicht wird.

Mit der Auswahltaste 23 kann entweder eine der beiden Vermittlungsstellen 13, 16 ausgewählt werden. Alternativ besteht auch die Möglichkeit, mit der Auswahltaste eine der beiden Verbindungsleitungen 12a, 50 auszuwählen.

Die Darstellung der Auswahltaste 23 ist lediglich beispielhaft zu verstehen.

Die konkrete Ausführung bleibt dem Fachmann vorbehalten.

Bei anderen Ausführungsbeispielen der Erfindung ist an der entsprechenden Sprechstelle eine solche Auswahltaste nicht vorgesehen. Hier wird durch interne Verschaltung erreicht, dass bei Betätigung einer oder mehrerer Auswahltasten, z. B. der Auswahltasten 22a, 22b, 22c, 22d, 22e, unmittelbar - ohne, dass es der Wahl einer Vermittlungsstelle 13, 16 oder der Wahl einer Verbindungsleitung 12a, 50 bedarf - eine Verbindung zu der entsprechenden Gegenstelle hergestellt wird.

Darüber hinaus weist die Sprechstelle 11 der Fig. 6 optional eine angedeutete Anzeige 27 auf, die der Bedienperson dieser Sprechstelle 11 signalisiert, dass sich die Sprechstelle gerade in einem bestimmten Betriebsmodus, z. B. in einem von mehreren unterschiedlichen möglichen Betriebsmodi, befindet. Beispielsweise kann die Anzeige der Bedienperson signalisieren, dass sich die Sprechstelle gerade in einem ersten Betriebsmodus befindet, in dem sie über die Vermittlungsstelle 13 kommuniziert, oder sich in einem anderen, zweiten Betriebsmodus befindet, in dem sie über die Vermittlungsstelle 16 kommuniziert.

Die schematisch angedeutete Anzeige 27 kann auch als TouchScreen ausgebildet sein, und insoweit auch ein User-Interface oder einen Zugang 28 darstellen, der ebenfalls eine Auswahlmöglichkeit dahingehend bietet, ob eine Kommunikation mit einer ersten Vermittlungsstelle 13 oder mit einer zweiten Vermittlungsstelle 16 bewerkstelligt werden soll, oder ob eine Kommunikation mit anderen Sprechstellen über eine erste Verbindungsleitung 12 oder über eine zweite Verbindungsleitung 50 stattfinden soll.

Auch das in Figur 6 mit 28 bezeichnete Element kann zusätzlich und/oder alternativ als User-Interface oder Schnittstelle oder Zugang 28 ausgebildet sein.

Von der Erfindung ist auch umfasst, wenn eine erste Gruppe von Auswahltasten (zum Beispiel die Auswahltasten 22a, 22b, 22c, 22d) eine Kommunikation dieser Sprechstelle über die erste Verbindungsleitung 12 ermöglichen, und eine zweite Gruppe von Auswahltasten (22e, 22f, 22g, 22h) eine Kommunikation dieser Sprechstelle mit anderen Sprechstellen über die zweite Verbindungsleitung 50 ermöglichen.

Alternativ oder zugleich kann der Bedienperson dieser Sprechstelle über die Anzeige 27 signalisiert werden, mit welchem Intercom-Netzwerk 10, 14 die Sprechstelle 11 gerade kommuniziert, oder welche Teilnehmer von dieser Sprechstelle gerade erreichbar sind.

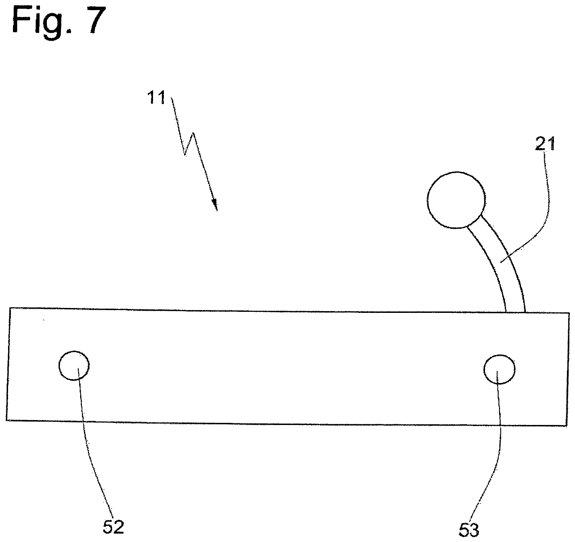

Ausweislich Fig. 7 ist in einer schematischen Rückansicht dargestellt, dass die erfindungsgemäße Sprechstelle 11 einen ersten Anschluss 52 zur Verbindung mit der ersten Vermittlungsstelle 13 über die erste Verbindungsleitung 12, sowie einen zweiten Anschluss 53 zur Verbindung mit der zweiten Vermittlungsstelle 16 über die zweite Verbindungsleitung 50 aufweist. Bei diesem Ausführungsbeispiel sind der erste Verbindungsleitungsanschluss 52 und der zweite Verbindungsleitungsanschluss 53 als voneinander getrennte, physikalische Anschlüsse ausgebildet. Beispielsweise kann es sich um Steckverbinder oder dergleichen handeln.

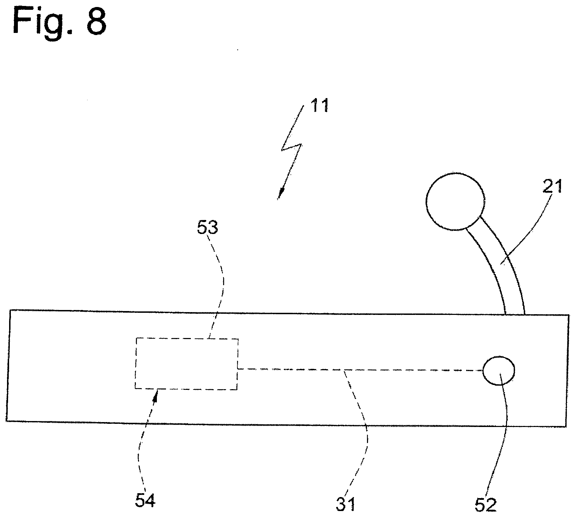

Demgegenüber zeigt das weitere Ausführungsbeispiel einer Schnittstelle 11 in einer Rückansicht gemäß Fig. 8 nur einen ersten physikalischen Anschluss 52 zur Verbindung mit der ersten Verbindungsleitung, wobei der zweite Anschluss 53 zur Verbindung mit der zweiten Verbindungsleitung als logischer Anschluss 54 ausgebildet ist, und - in Analogie zu der Darstellung des Ausführungsbeispiels der Fig. 5 - über eine interne Leitung 31 mit dem ersten Verbindungsleitungsanschluss 52 verbunden ist.

Angemerkt sei, dass die Zahl der Sprechstellen und die Zahl der an eine Sprechstelle anschließbaren Vermittlungsstellen, bzw. auch die Zahl der an einer Sprechstelle vorsehbaren Verbindungsleitungs-Anschlüsse, bei sämtlichen Ausführungsbeispielen nach freiem Belieben wählbar ist.

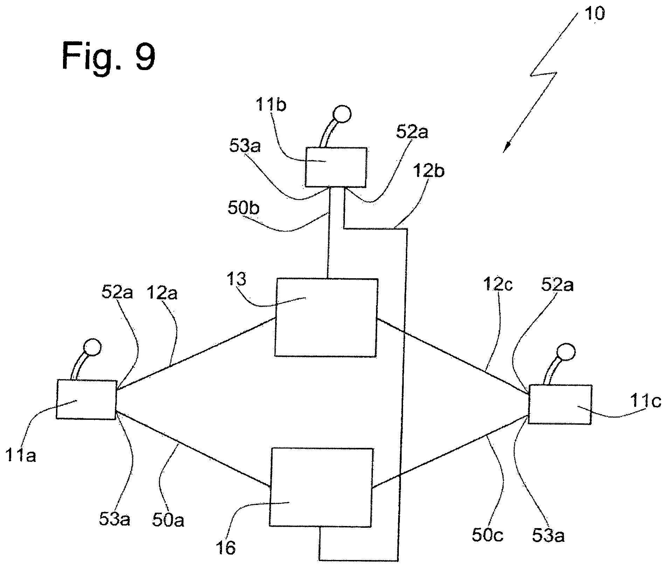

Anhand der Fig. 9 wird nachfolgend noch ein weiteres Ausführungsbeispiel eines erfindungsgemäßen Intercom-Netzwerkes 10 vorgestellt, welches vollständig redundant ausgebildet ist. Die Darstellung und die Architektur dieses Netzwerkes ist vergleichbar mit der Darstellung des Ausführungsbeispiels der Fig. 4. Hier besteht in Abweichung der Darstellung der Fig. 4 die Besonderheit darin, dass das Intercom-Netzwerk zwei Vermittlungsstellen 13, 16 aufweist. Eine der beiden Vermittlungsstellen, beispielsweise die Vermittlungsstelle 13, arbeitet im Normalbetrieb alleinig. Lediglich bei Ausfall dieser Vermittlungsstelle 13 kann die redundant vorgesehene zweite Vermittlungsstelle 16 einspringen. Hierzu sind die beiden Vermittlungsstellen 13, 16 identisch konfiguriert, sozusagen - fachmännisch ausgedrückt - gespiegelt.

Jede der Sprechstellen 11a, 11b, 11c ist über die zugehörige erste Verbindungsleitung 12a, 12b, 12c mit der ersten Vermittlungsstelle 13 verbunden. Zugleich ist jede der Sprechstellen 11a, 11b, 11c jeweils über eine zweite Verbindungsleitung 50a, 50b, 50c mit der zweiten, redundant vorgesehen Vermittlungsstelle 16 verbunden.

Für den Fall, dass die erste Vermittlungsstelle 13 während des Betriebes des Netzwerkes, beispielsweise bei einer Live-Veranstaltung, ausfallen sollte, kann die zweite Vermittlungsstelle 16 sofortig, ohne dass die Bedienperson oder der User der Sprechstellen 11a, 11b, 11c dies überhaupt bemerkt oder bemerken muss, die Arbeit und Funktion der ausgefallenen ersten Schnittstelle 13 übernehmen, und den Betrieb des Intercom-Netzwerkes aufrecht erhalten.

Die beiden identisch konfigurierten Vermittlungsstellen 13, 16 können, was in Fig. 9 nicht dargestellt ist, miteinander auch verbunden sein. Eine solche Verbindung kann beispielsweise auch eine ständige Funktionsprüfung der ersten Vermittlungsstelle 13 umfassen, und/oder eine Übermittlung eines Störsignals oder eines Initialisierungssignals zulassen, welches unmittelbar ein Einschalten und eine Betriebsübernahme der zweiten Vermittlungsstelle 16 befiehlt, wenn die erste Vermittlungsstelle 13 ausfällt.

Im Übrigen versteht sich das Ausführungsbeispiel der Fig. 9 unter Rückgriff auf die vorherige Beschreibung der übrigen Ausführungsbeispiele, so dass zur Vermeidung von Wiederholungen auf die oben angeführten Passagen verwiesen wird.

Bei dem Ausführungsbeispiel der Fig. 9 kann beispielsweise auch vorgesehen sein, dass die beiden Vermittlungsstellen 13, 16 sich regelmäßig - ohne, dass eine Störung festgestellt werden muss - ablösen. Beispielsweise kann vorgesehen sein, dass zu regelmäßigen Zeitpunkten, z. B. alle 60 Sekunden, jeweils eine der beiden Vermittlungsstellen 13, 16, die Arbeit von der anderen Vermittlungsstelle 16, 13 aufnimmt, oder übernimmt, so dass hier ein Wechselbetrieb vorgesehen ist.

Entscheidend ist aber, dass das Intercom-Netzwerk 10 gemäß Fig. 9 einen Ablösebetrieb ermöglicht, so dass eine intakte, gespiegelt konfigurierte Vermittlungsstelle 16 unter Zuhilfenahme der Vielzahl von zweiten Verbindungsleitungen 50a, 50b, 50c im Falle einer Störung oder eines Ausfalls der ersten Vermittlungsstelle 13, deren Betrieb vollständig übernehmen kann.

Jede der Sprechstellen 11a, 11b, 11c weist, wie aus Fig. 9 ersichtlich, einen Anschluss 52a, 52b, 52c zur Verbindung mit der ersten Verbindungsleitung 12a, 12b, 12c und einen zweiten Anschluss 53a, 53b, 53c zur Verbindung mit der zweiten Verbindungsleitung 50a, 50b, 50c auf.

Der guten Ordnung halber sei angeführt, dass es sich wiederum um zwei getrennte, physikalische Anschlüsse oder um zwei gesonderte Anschlüsse 52, 53 handeln kann. Alternativ kann der zweite Anschluss 53 auch als logischer Anschluss 54 ausgebildet sein, was in Fig. 9 allerdings nicht dargestellt ist.

## Patentansprüche

1. Intercom-Netzwerk (10), umfassend eine Vielzahl von Sprechstellen (11a, 11b, 11c), und wenigstens eine Vermittlungsstelle (13, 16), wobei von jeder an die Vermittlungsstelle angeschlossene Sprechstelle eine Verbindungsleitung (12a, 12b, 12c) zu der Vermittlungsstelle verläuft, wobei die Verbindungsleitung jeweils eine direkte Verbindung zwischen der Vermittlungsstelle und der angeschlossenen Sprechstelle bereitstellt, wobei die Vermittlungsstelle diese Verbindungen schaltet, konfiguriert und administriert, und wobei die Sprechstellen des Intercom-Netzwerkes infolge einer Audio-Daten-Übermittlung über die Vermittlungsstelle miteinander in Echtzeit in Audio-Kommunikation treten können, **dadurch gekennzeichnet, dass** mindestens eine Sprechstelle (11a) einen Anschluss (53, 54) für eine zweite Verbindungsleitung (50, 50a, 50b, 50c) aufweist, über die die Sprechstelle mit derselben Vermittlungsstelle (13) oder einer anderen Vermittlungsstelle (16) verbunden ist.

2. Intercom-Netzwerk nach Anspruch 1, **dadurch gekennzeichnet, dass** die Sprechstelle (11a, 11b, 11c) über die zweite Verbindungsleitung (50a, 50b, 50c) mit derselben Vermittlungsstelle (13) verbunden ist, und eine zu der ersten Verbindungsleitung redundante Verbindungsleitung bereitstellt.

3. Intercom-Netzwerk nach Anspruch 2, **dadurch gekennzeichnet, dass** jede der an eine Vermittlungsstelle angeschlossenen Sprechstellen jeweils einen Anschluss (53) für eine zweite Verbindungsleitung (50a, 50b, 50c) aufweist, über die die Sprechstelle mit derselben Vermittlungsstelle unter Ausbildung eines redundanten Intercom-Netzwerkes verbunden ist.

4. Intercom-Netzwerk nach Anspruch 1, **dadurch gekennzeichnet, dass** die Sprechstelle (11a) über die zweite Verbindungsleitung (50) mit einer anderen Vermittlungsstelle (16) desselben Intercom-Netzwerkes verbunden ist.

5. Intercom-Netzwerk nach Anspruch 1, **dadurch gekennzeichnet, dass** die Sprechstelle über die zweite Verbindungsleitung (50) mit einer anderen Vermittlungsstelle eines anderen Intercom-Netzwerkes verbunden ist.

6. Intercom-Netzwerk nach einem der vorangegangenen Ansprüche, **dadurch gekennzeichnet, dass** eine Sprechstelle jeweils einen Lautsprecher (20) und ein Mikrofon (21), umfasst.

7. Intercom-Netzwerk nach Anspruch 4 oder 5, **dadurch gekennzeichnet, dass** eine Sprechstelle (11) jeweils mehrere Auswahltasten (22a, 22b, 22c, 22d, 22e, 22f, 22g, 22h) aufweist, wobei mittels Betätigung einer ersten Auswahltaste (22a) durch einen Bediener eine unmittelbare Audio-Verbindung zwischen dieser Sprechstelle (11a) und einer ausgewählten Sprechstelle (11b) über die erste Verbindungsleitung (12a) und über eine erste Vermittlungsstelle (13) bewerkstelligbar und mittels Betätigung einer zweiten Auswahltaste (22g) durch einen Bediener eine unmittelbare Audio-Verbindung zwischen dieser Sprechstelle (11a) und einer ausgewählten Sprechstelle (15c) über die zweite Verbindungsleitung (50) und die zweite Vermittlungsstelle (16) bewerkstelligbar ist.

8. Intercom-Netzwerk nach einem der Ansprüche 1 bis 7, **dadurch gekennzeichnet, dass** eine Sprechstelle jeweils mehrere Auswahltasten aufweist, wobei mittels Betätigung einer ersten Auswahltaste (22a) durch einen Bediener eine unmittelbare Audio-Verbindung zwischen dieser Sprechstelle (11a) und einer ausgewählten Sprechstelle (11b) über die erste Verbindungsleitung (12a) bewerkstelligbar und mittels Betätigung einer zweiten Auswahltaste (22g) durch einen Bediener eine unmittelbare Audio-Verbindung zwischen dieser Sprechstelle und einer ausgewählten Sprechstelle (15c) über die zweite Verbindungsleitung (50) bewerkstelligbar ist.

9. Intercom-Netzwerk nach einem der vorangegangenen Ansprüche, **dadurch gekennzeichnet, dass** eine Sprechstelle einen Zugang (28) zur Auswahl einer Verbindung über die erste Verbindungsleitung oder über die zweite Verbindungsleitung aufweist, wobei über den Zugang (28), insbesondere mittels Betätigung einer Verbindungsleitungs-Auswahltaste, durch einen Bediener eine unmittelbare Audio-Verbindung zwischen dieser Sprechstelle und einer weiteren ausgewählten Sprechstelle entweder über die erste Verbindungsleitung oder über die zweite Verbindungsleitung bewerkstelligbar ist.

10. Intercom-Netzwerk nach einem der Ansprüche 1 bis 9, **dadurch gekennzeichnet, dass** einer Sprechstelle ein Display (27) zugeordnet ist, insbesondere, dass eine Sprechstelle ein Display aufweist, wobei auf dem Display Informationen anzeigbar sind, welche Verbindungsleitung ausgewählt worden oder aktiv ist oder welche Vermittlungsstelle ausgewählt oder aktiv ist.

11. Intercom-Netzwerk nach einem der Ansprüche 1 bis 10, **dadurch gekennzeichnet, dass** eine Sprechstelle ein User-Interface (27) aufweist, das eine Eingabe von Informationen durch eine Bedienperson, insbesondere eine Auswahl von bereitgestellten Informationen durch eine Bedienperson, zum Zwecke der Übermittlung der Informationen über die erste Verbindungsleitung oder über die zweite Verbindungsleitung ermöglicht.

12. Intercom-Netzwerk nach einem der vorangegangenen Ansprüche, **dadurch gekennzeichnet, dass** der Anschluss (53) zur Verbindung der Sprechstelle (11a) über eine zweite Verbindungsleitung (50) mit einer Vermittlungsstelle (16) als physikalischer Anschluss ausgebildet ist, und gesondert von einem an der Sprechstelle angeordneten ersten Verbindungsleitungs-Anschluss (52) bereit gestellt ist.

13. Intercom-Netzwerk nach einem der Ansprüche 1 bis 11, **dadurch gekennzeichnet, dass** der Anschluss (53) zur Verbindung der Sprechstelle über eine zweite Verbindungsleitung (50) mit einer Vermittlungsstelle als logischer Anschluss (54) ausgebildet ist, wobei der logische Anschluss mit der zweiten Verbindungsleitung (50) verbunden ist.

14. Sprechstelle (11), in einem wenigstens eine Vermittlungsstelle (13, 16) aufweisenden Intercom-Netzwerk nach Anspruch 1 (10, 14), umfassend einen Lautsprecher (20) und ein Mikrofon (21), und einen ersten Verbindungsleitungs-Anschluss (51) zur direkten Verbindung mit der Vermittlungsstelle (13), sowie umfassend mehrere Auswahltasten (22a, 22b, 22c), wobei mittels Betätigung einer Auswahltaste durch einen Bediener eine unmittelbare Audio-Verbindung zwischen dieser Sprechstelle (11a) und einer ausgewählten Sprechstelle (11b) des Intercom-Netzwerkes über die Vermittlungsstelle (13) bewerkstelligbar ist, **dadurch gekennzeichnet, dass** die Sprechstelle einen zweiten Verbindungsleitungs-Anschluss (53, 54) zur Verbindung der Sprechstelle über eine zweite Verbindungsleitung (50, 50a, 50b, 50c) mit derselben Vermittlungsstelle (13) oder zur Verbindung der Sprechstelle mit einer anderen Vermittlungsstelle (16) aufweist.

15. Sprechstelle nach Anspruch 14, **dadurch gekennzeichnet, dass** die Sprechstelle einen Zugang (28) zu der zweiten Verbindungsleitung (50, 50a, 50b, 50c) aufweist, insbesondere eine Verbindungsleitungs-Auswahltaste, wobei infolge einer Betätigung des Zugangs, insbesondere mittels Betätigung der Verbindungsleitungs-Auswahltaste, durch eine Bedienperson eine unmittelbare Audio-Verbindung zwischen dieser Sprechstelle und einer weiteren, ausgewählten Sprechstelle, wahlweise über die zweite Verbindungsleitung bewerkstelligbar ist.

## Claims

1. An intercom network (10), comprising a plurality of speech stations (11a, 11b, 11c) and at least one switching centre (13, 16), wherein from each speech station connected to the switching centre a connecting line (12a, 12b, 12c) extends to the switching centre, wherein the connecting line provides a direct connection, respectively, between the switching centre and the connected speech station, wherein the switching centre switches, configures and manages these connections and wherein the speech stations of the intercom network, due to an audio data communication via the switching centre, can enter into audio communication with each other in real time, **characterised in that** at least one speech station (11a) comprises a terminal (53, 54) for a second connecting line (50, 50a, 50b, 50c), via which the speech station is connected with the same switching centre (13) or with another switching centre (16).

2. The intercom network according to claim 1, **characterised in that** the speech station (11a, 11b, 11c) is connected with the same switching centre (13) via the second connecting line (50a, 50b, 50c), providing a redundant connecting line compared to the first connecting line.

3. The intercom network according to claim 2, **characterised in that** each of the speech stations connected to a switching centre comprises a terminal (53) for a second connecting line (50a, 50b, 50c), via which the speech station is connected with the same switching centre, thereby forming a redundant intercom network.

4. The intercom network according to claim 1, **characterised in that** the speech station (11a) is connected via the second connecting line (50) with another switching centre (16) of the same intercom network.

5. The intercom network according to claim 1, **characterised in that** the speech station is connected via the second connecting line (50) with another switching centre of another intercom network.

6. The intercom network according to one of the preceding claims, **characterised in that** each speech station comprises a loudspeaker (20) and a microphone (21).

7. The intercom network according to claim 4 or 5, **characterised in that** each speech station (11) comprises several selections keys (22a, 22b, 22c, 22d, 22e, 22f, 22g, 22h), wherein when a first selection key (22a) is pressed by an operator, a direct audio connection can be established between this speech station (11a) and a selected speech station (11b) via the first connecting line (12a) and via a first switching centre (13), and when a second selection key (22g) is pressed by an operator, a direct audio connection can be established between this speech station (11a) and a selected speech station (15c) via a second connecting line (50) and the second switching centre (16).

8. The intercom network according to one of claim 1 to 7, **characterised in that**, when a first selection key (22a) is pressed by an operator, a direct audio connection can be established between this speech station (11a) and a selected speech station (11b) via the first connecting line (12a), and when a second selection key (22g) is pressed by an operator, a direction audio connection can be established between this speech station and a selected speech station (15c) via the second connecting line (50).

9. The intercom network according to one of the preceding claims, **characterised in that** a speech station comprises an access (28) for selecting a connection via the first connecting line or the second connecting line, wherein via the access (28), in particular when a connecting-line selection key is pressed by an operator, a direct audio connection can be established between this speech station and a further selected speech station either via the first connecting line or via the second connecting line.

10. The intercom network according to one of claims 1 to 9, **characterised in that** a speech station has a display (27) associated with it, in particular **in that** a speech station comprises a display, on which information can be displayed regarding which connecting line has been selected or is active or regarding which switching centre has been selected or is active.

11. The intercom network according to one of claims 1 to 10, **characterised in that** a speech station comprises a user interface (27), which permits the input of information by an operator, in particular a selection of available information by an operator, for the purpose of communicating the information via the first connecting line or via the second connecting line.

12. The intercom network according to one of the preceding claims, **characterised in that** the terminal (53) for connecting the speech station (11a) via a second connecting line (50) with a switching centre (16) is configured as a physical terminal, and is made separately available by a first connecting-line terminal (52) arranged at the speech station.

13. The intercom network according to one of claims 1 to 11, **characterised in that** the terminal (53) for connecting the speech station via a second connecting line (50) with a switching centre is configured as a logical terminal (54), wherein the logical terminal is connected with a second connecting line (50).

14. A speech station (11) in an intercom network (10, 14) according to claim 1, comprising at least one switching centre (13, 16), with a loudspeaker (20) and a microphone (21), and a first connecting line terminal (51) for direct connection with the switching centre (13), and with several selection keys (22a, 22b, 22c), wherein, when a selection key is pressed by an operator, a direct audio connection can be established between this speech station (11a) and a selected speech station (11b) of the intercom network via the switching centre (13), **characterised in that** the speech station comprises a second connecting line terminal (53, 54) for connecting the speech station via a second connecting line (50, 50a, 50b, 50c) with the same switching centre (13) or for connecting the speech station with another switching centre (16).

15. The speech station according to claim 14, **characterised in that** the speech station comprises an access (28) to the second connecting line (50, 50a, 50b, 50c), in particular a connecting-line selection key, wherein due to pressing the access, in particular when the connecting-line selection key is pressed by an operator, a direct audio connection can be established between this speech station and a further selected speech station, optionally via the second connecting line.

## Revendications

1. Réseau d'interphonie (10) comprenant une multitude de postes d'interphonie (11a, 11b, 11c) et au moins un commutateur (13, 16), dans lequel un câble de liaison (12a, 12b, 12c) part de chaque poste d'interphonie connecté au commutateur en direction de ce dernier, dans lequel ce câble de liaison établit une liaison directe entre le commutateur et le poste d'interphonie connecté, dans lequel le commutateur commute, configure et administre ces liaisons et dans lequel les postes d'interphonie du réseau d'interphonie peuvent entrer en communication audio en temps réel entre eux du fait d'une transmission des données audio par le commutateur, **caractérisé en ce qu'**au moins un poste d'interphonie (11a) présente une connexion (53, 54) pour un deuxième câble de liaison (50, 50a, 50b, 50c) qui relie le poste d'interphonie au même commutateur (13) ou à un autre commutateur (16).

2. Réseau d'interphonie selon la revendication 1, **caractérisé en ce que** le poste d'interphonie (11a, 11b, 11c) est relié au même commutateur (13) par le deuxième câble de liaison (50a, 50b, 50c), ce dernier constituant un câble de liaison redondant par rapport au premier câble de liaison.

3. Réseau d'interphonie selon la revendication 2, **caractérisé en ce que** chacun des postes d'interphonie connectés à un commutateur possède une connexion (53) pour un deuxième câble de liaison (50a, 50b, 50c) par lequel le poste d'interphonie est relié au même commutateur, formant ainsi un réseau d'interphonie redondant.

4. Réseau d'interphonie selon la revendication 1, **caractérisé en ce que** le poste d'interphonie (11a) est relié par le deuxième câble de liaison (50) avec un autre commutateur (16) du même réseau d'interphonie.

5. Réseau d'interphonie selon la revendication 1, **caractérisé en ce que** le poste d'interphonie est relié par le deuxième câble de liaison (50) avec un autre commutateur d'un autre réseau d'interphonie.

6. Réseau d'interphonie selon une des revendications précédentes, **caractérisé en ce qu'**un poste d'interphonie comprend un haut-parleur (20) et un microphone (21).

7. Réseau d'interphonie selon la revendication 4 ou 5, **caractérisé en ce qu'**un poste d'interphonie (11) possède plusieurs touches de sélection (22a, 22b, 22c, 22d, 22e, 22f, 22g, 22h), une liaison audio directe pouvant être créée par l'activation d'une première touche de sélection (22a) par un opérateur entre ce poste d'interphonie (11a) et un poste d'interphonie sélectionné (11b) via le premier câble de liaison (12a) et via un premier commutateur (13) et une liaison audio directe pouvant être créée par l'activation d'une deuxième touche de sélection (22g) par un opérateur entre ce poste d'interphonie (11a) et un poste d'interphonie sélectionné (15c) via le deuxième câble de liaison (50) et via le deuxième commutateur (16).

8. Réseau d'interphonie selon une des revendications 1 à 7, **caractérisé en ce qu'**un poste d'interphonie possède plusieurs touches de sélection, une liaison audio directe pouvant être créée par l'activation d'une première touche de sélection (22a) par un opérateur entre ce poste d'interphonie (11a) et un poste d'interphonie sélectionné (11b) via le premier câble de liaison (12a) et une liaison audio directe pouvant être créée par l'activation d'une deuxième touche de sélection (22g) par un opérateur entre ce poste d'interphonie et un poste d'interphonie sélectionné (15c) via le deuxième câble de liaison (50).

9. Réseau d'interphonie selon une des revendications précédentes, **caractérisé en ce qu'**un poste d'interphonie possède un dispositif d'accès (28) pour choisir une liaison via le premier câble de liaison ou via le deuxième câble de liaison, une liaison audio directe entre ce poste d'interphonie et un autre poste d'interphonie sélectionné pouvant être créée soit via le premier câble de liaison, soit via le deuxième câble de liaison, par le biais du dispositif d'accès (28), en particulier par l'activation d'une touche de sélection de câble de liaison par un opérateur.

10. Réseau d'interphonie selon une des revendications 1 à 9, **caractérisé en ce qu'**un écran (27) est associé à un poste d'interphonie, en particulier **en ce qu'**un poste d'interphonie possède un écran, l'écran pouvant afficher des informations indiquant quel câble de liaison a été sélectionné ou est actif ou quel commutateur est sélectionné ou est actif.

11. Réseau d'interphonie selon une des revendications 1 à 10, **caractérisé en ce qu'**un poste d'interphonie possède une interface opérateur (27) qui permet une entrée d'informations par un opérateur, en particulier une sélection d'informations fournies par un opérateur, dans le but de transmettre ces informations par le premier câble de liaison ou par le deuxième câble de liaison.

12. Réseau d'interphonie selon une des revendications précédentes, **caractérisé en ce que** la connexion (53) pour relier le poste d'interphonie (11a) via un deuxième câble de liaison (50) à un commutateur (16) est conçue comme une connexion physique et est fournie séparément d'une première connexion de câble de liaison (52) placée sur le poste d'interphonie.

13. Réseau d'interphonie selon une des revendications 1 à 11, **caractérisé en ce que** la connexion (53) pour relier le poste d'interphonie via un deuxième câble de liaison (50) à un commutateur est conçue comme une connexion logique (54), cette connexion logique étant reliée avec le deuxième câble de liaison (50).

14. Poste d'interphonie (11) dans un réseau d'interphonie (10, 14) possédant au moins un commutateur (13, 16) selon la revendication 1, comprenant un haut-parleur (20) et un microphone (21), et une première connexion de câble de liaison (51) pour le relier directement au commutateur (13), et comprenant aussi plusieurs touches de sélection (22a, 22b, 22c), l'activation d'une touche de sélection par un opérateur pouvant créer une liaison audio directe entre ce poste d'interphonie (11a) et un poste d'interphonie sélectionné (11b) du réseau d'interphonie via le commutateur (13), **caractérisé en ce que** le poste d'interphonie possède une deuxième connexion de câble de liaison (53, 54) pour le relier par un deuxième câble de liaison (50, 50a, 50b, 50c) au même commutateur ou pour le relier à un autre commutateur (16).

15. Poste d'interphonie selon la revendication 14, **caractérisé en ce qu'**il possède un dispositif d'accès (28) au deuxième câble de liaison (50, 50a, 50b, 50c), en particulier une touche de sélection de câble de liaison, l'activation du dispositif d'accès, en particulier l'activation de la touche de sélection de câble de liaison par un opérateur permettant de créer une liaison audio directe entre ce poste d'interphonie et un autre poste d'interphonie sélectionné, au choix par un deuxième câble de liaison.
